Europäisches Patentamt

European Patent Office

Office européen des brevets

(11) Publication number: **0 318 044**
**A2**

# (12) EUROPEAN PATENT APPLICATION

(21) Application number: **88119721.4**

(22) Date of filing: **25.11.88**

(51) Int. Cl.⁴: **G06K 13/06**

(30) Priority: **26.11.87 JP 298471/87**

(43) Date of publication of application:
**31.05.89 Bulletin 89/22**

(84) Designated Contracting States:
**AT BE CH DE ES FR GB GR IT LI LU NL SE**

(71) Applicant: **OMRON TATEISI ELECTRONICS CO.**
**10, Tsuchido-cho Hanazono Ukyo-ku Kyoto 616(JP)**

(72) Inventor: **Mita, Katsuya c/o Omron Tateisi Electronics Co.**
**Patent Center 20 Igadera Shimokaiinji Nagaokakyo-shi Kyoto 617(JP)**

(74) Representative: **Wilhelms, Rolf E., Dr. et al WILHELMS, KILIAN & PARTNER Patentanwälte Eduard-Schmid-Strasse 2 D-8000 München 90(DE)**

(54) **Card reader.**

(57) There is provided a card reader which has a card conveying path (16) to sandwich and convey a card (19) between the surfaces of a pair of opposite conveying belts (13, 15) reeved around pulleys (12, 14) and which processes card datt by a card processing section (17) arranged on the card conveying path. When it is detected that a drive motor (20) to drive the conveying belts is continuously stopped for a predetermined period of time, the drive motor is raced for a predetermined period of time to prevent that the belts are deformed.

Fig.3

EP 0 318 044 A2

# CARD READER

## BACKGROUND OF THE INVENTION

### Field of the Invention

The present invention relates to a card reader which is provided in, e.g., an automatic cash depositing and dispensing machine or an automated teller machine and reads data from a card (including a magnetic card, an IC card and an optical card) such as cash card, bank card, credit card, etc. and, if necessary, writes data onto such a card and, more particularly, to a card reader which can improve the conveying performance of the card at low temperatures.

### Prior Art Statement

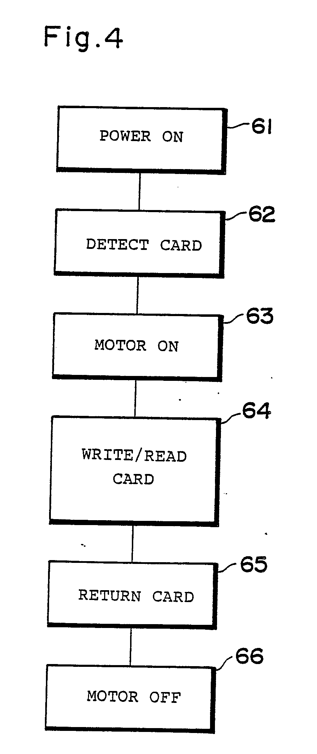

In general, as shown in a flowchart of Fig. 4, this type of card reader is set to a standby mode when a power source is turned on in step 61. In this standby mode, if the insertion of a card is detected in step 62, a motor is driven in step 63 to convey the card to an internal card processing position. In step 64, data is read out from or written onto the card conveyed to the card processing position. Thereafter, in step 65, the card on the card conveying path is returned by reversely driving the motor. After the card was returned, the driving of the motor is stopped in step 66 and the card transaction is finished.

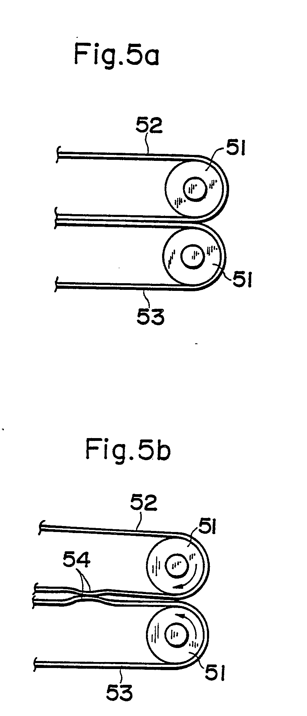

For a conveying belt having a soft elastic characteristic suitable for sandwiching and conveying the foregoing card, as shown in Fig. 5a, a card is sandwiched and conveyed between the surfaces of a pair of upper and lower conveying belts 52 and 53 which are reeved around pulleys 51 and face each other.

However, when the card reader is stopped for a long time, for instance, when it is stopped for a long time at low temperatures at night or the like, the soft elastic characteristic of the conveying belts deteriorates, that is, the belts are hardened, and the portions of the belts reeved to the pulleys become hard in the curved state along the outer peripheral surfaces of the pulleys. Therefore, as shown in Fig. 5b, when the movement of the conveying belts is started, curved portions 54 of the belts are not completely extended to straight lines and the belts are rotated with the slightly expanded curved portions remained. Thus, the conveying speed of the card which is sandwiched and conveyed between the conveying belts 52 and 53 having the curved portions becomes unstable, causing a defective data processing operation.

## SUMMARY OF THE INVENTION

It is an object of the present invention to provide a card reader which can always smoothly convey a card by managing so as not to cause curved portions in the portions along pulleys of conveying belts even at low temperatures.

According to the invention, this object is accomplished by a card reader comprising: means for detecting that a drive motor to drive conveying belts on a card conveying path is continuously stopped for a predetermined period of time; and control means for racing the drive motor for a predetermined period of time to prevent the deformation of the belts in response to the detection by the detecting means.

According to the invention, each time the conveyance stop time has elapsed for a predetermined period of time because the transaction or the like by using a card is not executed, the drive motor is driven for a predetermined period of time, thereby racing the conveying belts.

Thus, the conveying belts are raced before they are hardened, the same positions of the conveying belts are not locally come into contact with the pulleys for a long time and the occurrence of the curved portions can be prevented.

Therefore, the whole lengths of the conveying belts are always uniformly reeved and supported and even at low temperatures at night or the like when the belts are easily hardened, by performing the pre-driving operation of the belts, the quality of the soft belts is maintained and the deformation of the belts can be prevented.

Thus, the circulating speeds of the conveying belts become stable and the card can be smoothly conveyed and the stable card data process of a high performance can be accomplished.

## BRIEF DESCRIPTION OF THE DRAWINGS

Fig. 1 is a side elevational view of a magnetic card reader;

Fig. 2 is a block diagram of a control circuit of the magnetic card reader;

Fig. 3 is a flowchart showing a processing procedure in the magnetic card reader;

Fig. 4 is a flowchart showing a processing procedure in a conventional card reader;

Fig. 5a is an explanatory diagram of a stop state of conveying belts; and

Fig. 5b is an explanatory diagram of a starting state of conveying belts.


DETAILED DESCRIPTION OF A PREFERRED EMBODIMENT


An embodiment of the present invention will be described in detail hereinbelow with reference to the drawings.

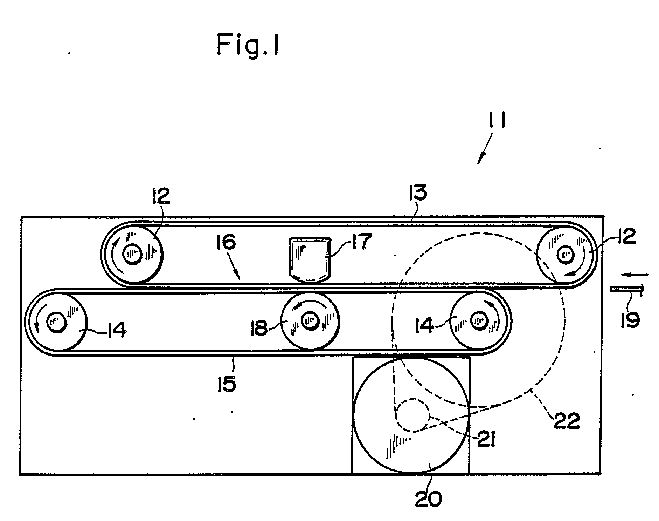

In Fig. 1, in a magnetic card reader 11, upper conveying belts 13 reeved around upper pulleys 12 locating at both ends and lower conveying belts 15 reeved around lower pulleys 14 similarly locating at both ends are arranged so as to face each other, thereby horizontally constructing a sandwiching conveying path 16 of a card 19.

A magnetic head 17 to read or write data onto/from the card 19 and a roller 18 which faces the magnetic head 17 are vertically arranged at the intermediate position of the sandwiching conveying path 16. Data on a magnetic stripe formed on a magnetic card 19 conveyed to this head position is read out or written by the head 17, thereby performing the data process.

In the conveying path 16, the rotation of a drive motor 20 is transferred to one of the lower pulleys 14 which is attached coaxially with a driven pulley 22 through a drive pulley 21 and the driven pulley 22, thereby rotating the upper and lower conveying belts 13 and 15.

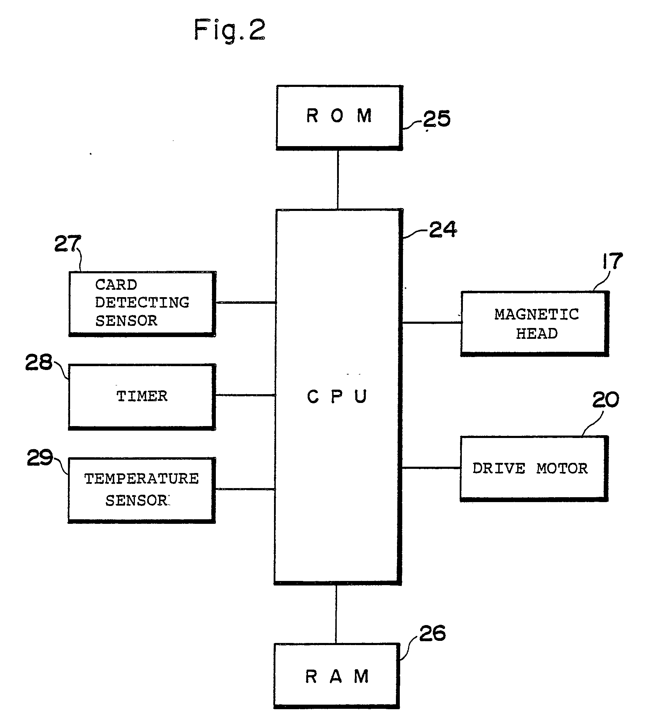

Fig. 2 shows a block diagram of a control circuit of the magnetic card reader. A CPU 24 controls each circuit and apparatus in accordance with a program stored in a ROM 25. An RAM 26 stores and reads out predetermined data.

A card detecting sensor 27 is arranged at the front stage of the conveying path 16 detects that the magnetic card 19 has been inserted to this position.

A temperature sensor 29 detects a temperature of the location where the card reader is set and gives the detected temperature data to the CPU 24.

A timer 28 detects that the period of time when the conveyance is continuously set in the stop state has elapsed for a predetermined period of time because the transaction by using the card is not executed. When the timer 28 detects the elapse of such a predetermined period of time, the CPU 24 races the drive motor 20 for a predetermined period of time every detection of the timer 28, thereby avoiding that the portions of the conveying belts 13 and 15 along the pulleys 12 and 14 are curved.

Thus, the whole lengths of the conveying belts 13 and 15 are always uniformly reeved and supported. The circulating speeds of the conveying belts become stable, the card can be smoothly conveyed, and the stable data process of a high performance can be performed.

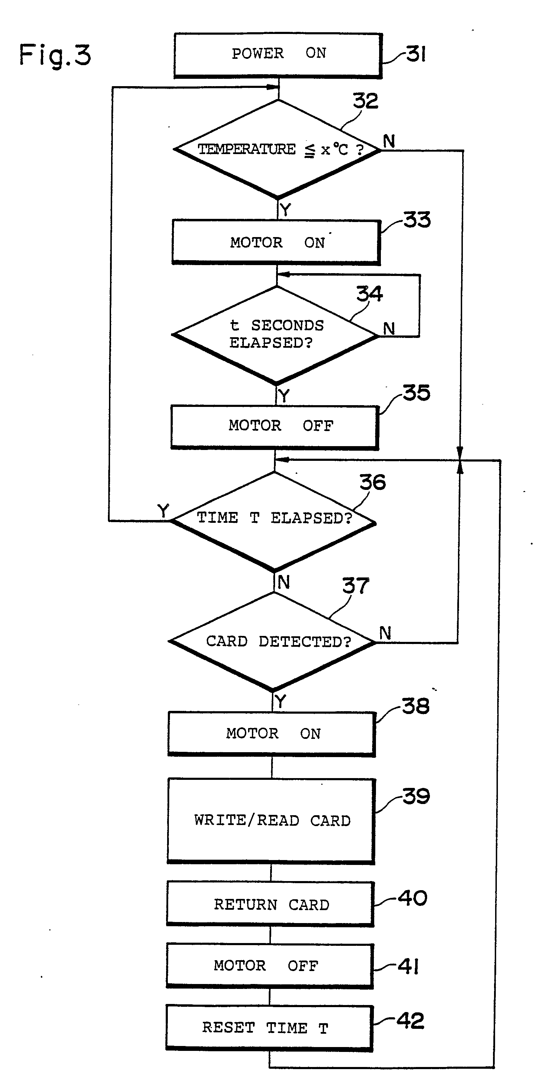

The processing procedure of the magnetic card reader constructed as mentioned above will be described with reference to a flowchart of Fig. 3.

In step 31, when a power source is turned on to the magnetic card reader 11, the card reader is set to the standby mode. In this standby mode, a temperature under the current use condition is checked in step 32. If the temperature lies within a low temperature range ($x °C$ or less) such that the belts are hardened, the motor 20 is driven in step 33 to race the upper and lower conveying belts 13 and 15, thereby preventing that the soft belts 13 and 15 are hardened and the elastic characteristic is lost.

In step 34, when it is detected that the racing time has elapsed a predetermined period of time t suitable to prevent that the conveying belts are hardened, the driving of the motor 20 has a predriving is stopped in step 35. Thus, the conveying belts 13 and 15 are raced before they are hardened at low temperatures. Portions of the conveying belts 13 and 15 are not locally come into contact with the pulleys 12 and 14 for a long time, so that the portions of the belts 13 and 15 can be prevented from being curved.

In step 36, when the continuous stop time of the drive motor 20 has elapsed a predetermined period of time T suitable to easily harden the belts 13 and 15, the processing routine is returned to step 32 to again race the belts 13 and 15 and the subsequent processes are executed. However, if the continuous stop time of the drive motor 20 does not elapse the predetermined period of time T, step 37 follows for the transacting process.

In step 37, when it is detected that the magnetic card 19 has been inserted to the magnetic card reader 11, the motor 20 is driven in step 38 to convey the inserted magnetic card 19 to the inner corresponding position of the magnetic head 17. In step 39, data is read out from or written onto the magnetic card 19 conveyed to the corresponding position of the magnetic head 17. Thereafter, in step 40. the magnetic card 19 on the conveying path 16 is returned by reversely rotating the motor 20. After the card was returned, the driving of the motor 20 is stopped in step 41 and the transaction using the card is finished. In response to the stop of the driving of the motor 20, the timer 28 starts the timing operation in step 42. After the measured time elapsed the predetermined period of time T, the processes in step 36 and subsequent steps are executed so as to again race the conveying belts 13 and 15.

Each time the conveyance continuous stop time which is caused because the transaction by using the card is not executed elapses for the predetermined period of time T as mentioned above, the drive motor is driven for the predetermined period of time t to race the conveying belts. Consequently, the conveying belts are raced before they are hardened, so that the occurrence of the curved portions which are formed since the same portions of the conveying belts are locally come into contact with the pulleys for a long time can be prevented.

Therefore, the whole lengths of the conveying belts are always uniformly reeved and supported. Even at low temperatures at night or the like when the belts are easily hardened, by performing the pre-driving operation of the belts, the quality of the soft belts can be maintained and the deformation of the belts can be prevented. Thus, the circulating speeds of the conveying belts become stable and the card can be smoothly conveyed and the stable data processes of a high performance can be executed.

## Claims

1. A card reader which has a card conveying path (16) to sandwich and convey a card (19) between surfaces of a pair of opposite conveying belts (13, 15) reeved around pulleys (12, 14) and which processes card data by a card processing section (17) arranged on said card conveying path, said card reader comprising:
means (28) for detecting that a drive motor (20) to drive the conveying belts is continuously stopped for a predetermined period of time; and
control means (24) for racing said drive motor for a predetermined period of time to prevent that the belts are deformed.

2. A card reader according to claim 1, comprising:
a temperature sensor (29) to detect an ambient temperature of the card reader; and
said control means (24) for racing the drive motor when a detected temperature by said temperature sensor (29) is a predetermined temperature or less.

# Fig.1

# Fig.2

ROM  —25

27 — CARD DETECTING SENSOR

28 — TIMER

29 — TEMPERATURE SENSOR

CPU  —24

MAGNETIC HEAD  17

DRIVE MOTOR  20

RAM  —26

Fig.3

```
                    ┌──────────────────┐
                    │   POWER   ON     │─── 31
                    └──────────────────┘
                             │
            ┌────────────────┤
            │            ◇◇◇◇◇◇◇◇◇◇◇◇◇◇◇ ─── 32
            │          ◇                   ◇    N
            │         ◇  TEMPERATURE ≦ x°C ? ◇────────┐
            │          ◇                   ◇          │
            │            ◇◇◇◇◇◇◇◇◇◇◇◇◇◇◇            │
            │                 │ Y                     │
            │        ┌──────────────────┐             │
            │        │    MOTOR   ON    │─── 33       │
            │        └──────────────────┘             │
            │                 │      ┌──────┐         │
            │            ◇◇◇◇◇◇◇◇◇◇◇◇◇   │         │
            │          ◇    t SECONDS   ◇   │         │
            │         ◇     ELAPSED?     ◇──┘N        │
            │          ◇                ◇             │
            │            ◇◇◇◇◇◇◇◇◇◇◇◇◇   34           │
            │                 │ Y                     │
            │        ┌──────────────────┐             │
            │        │   MOTOR   OFF    │─── 35       │
            │        └──────────────────┘             │
            │                 │ ◄───────────────────────┐
            │            ◇◇◇◇◇◇◇◇◇◇◇◇◇◇              │ │
            │      Y   ◇                  ◇ ─── 36     │ │
            └─────────◇  TIME T ELAPSED?  ◇           │ │
                       ◇                  ◇           │ │
                        ◇◇◇◇◇◇◇◇◇◇◇◇◇◇              │ │
                             │ N                      │ │
                        ◇◇◇◇◇◇◇◇◇◇◇◇◇◇              │ │
                      ◇                  ◇ ─── 37     │ │
                     ◇  CARD DETECTED?    ◇───────────┘ │
                      ◇                  ◇   N          │
                        ◇◇◇◇◇◇◇◇◇◇◇◇◇◇                │
                             │ Y                        │
                    ┌──────────────────┐                │
                    │    MOTOR   ON    │─── 38          │
                    └──────────────────┘                │
                             │                          │
                    ┌──────────────────┐                │
                    │                  │                │
                    │  WRITE/READ CARD │─── 39          │
                    │                  │                │
                    └──────────────────┘                │
                             │                          │
                    ┌──────────────────┐                │
                    │   RETURN CARD    │─── 40          │
                    └──────────────────┘                │
                             │                          │
                    ┌──────────────────┐                │
                    │   MOTOR   OFF    │─── 41          │
                    └──────────────────┘                │
                             │                          │
                    ┌──────────────────┐                │
                    │   RESET TIME T   │─── 42          │
                    └──────────────────┘                │
                             └──────────────────────────┘
```

# Fig.4

```
┌─────────────────────┐
│     POWER  ON       │─── 61
└─────────────────────┘
           │
┌─────────────────────┐
│    DETECT  CARD     │─── 62
└─────────────────────┘
           │
┌─────────────────────┐
│     MOTOR  ON       │─── 63
└─────────────────────┘
           │
┌─────────────────────┐
│     WRITE/READ      │─── 64
│       CARD          │
└─────────────────────┘
           │
┌─────────────────────┐
│    RETURN  CARD     │─── 65
└─────────────────────┘
           │
┌─────────────────────┐
│     MOTOR  OFF      │─── 66
└─────────────────────┘
```

## Fig.5a

## Fig.5b